(19) Europäisches Patentamt
European Patent Office
Office européen des brevets

(11) **EP 1 557 602 B1**

(12) **FASCICULE DE BREVET EUROPEEN**

(45) Date de publication et mention
de la délivrance du brevet:
**26.03.2008   Bulletin 2008/13**

(51) Int Cl.:
***F16L 59/02*** *(2006.01)*

(21) Numéro de dépôt: **04293045.3**

(22) Date de dépôt: **20.12.2004**

(54) **Conduite thermiquement isolée**

Thermisch isolierte Leitung

Thermical insulated conduit

(84) Etats contractants désignés:
**AT BE BG CH CY CZ DE DK EE ES FI FR GB GR
HU IE IS IT LI LT LU MC NL PL PT RO SE SI SK TR**

(30) Priorité:  **20.01.2004  FR 0400509**

(43) Date de publication de la demande:
**27.07.2005   Bulletin 2005/30**

(73) Titulaire: **Gaz Transport et Technigaz
78470 Saint-Rémy-Lès-Chevreuse (FR)**

(72) Inventeurs:
• **Dhellemmes, Jacques
78000 Versailles (FR)**

• **Michalski, Pierre
76620 Le Havre (FR)**

(74) Mandataire: **Laget, Jean-Loup
Cabinet PEUSCET
161, rue de Courcelles
75017 Paris (FR)**

(56) Documents cités:
**EP-A- 0 123 186       US-A- 2 611 567
US-A- 3 388 724       US-A- 4 014 369**

EP 1 557 602 B1

**Description**

La présente invention concerne une conduite thermiquement isolée destinée notamment au transport de gaz naturel liquéfié, notamment sous-marin, son utilisation et un terminal maritime comportant une telle conduite. Une telle conduite est connue par exemple du document US4014369.

On connaît l'utilisation de conduites en Inox ou en alliage de nickel qui permettent de transporter du gaz liquéfié en surface entre un méthanier à quai et un réservoir de stockage terrestre. Lorsque ces conduites sont mises en service, le refroidissement des conduites de la température ambiante à une température très basse, par exemple -162°C pour le méthane liquide à pression normale, s'accompagne d'une rétraction des matériaux constituant la conduite. Des mécanismes de compensation de la rétraction thermique, sous forme de lyre, c'est à dire une portion de tuyau s'écartant latéralement en forme de U ou de compensateur, c'est à dire une portion de tuyau ondulée à la manière d'un soufflet, sont prévus pour éviter que la rétraction brutale n'endommage les conduites.

En outre, la conduite doit nécessairement comprendre une isolation thermique pour éviter le réchauffement du gaz liquéfié et ainsi limiter sa vaporisation.

On connaît par la demande de brevet français FR-A-2 748 545 une conduite thermiquement isolée pour le transport de gaz naturel liquéfié. Cette conduite comprend deux tubes coaxiaux, un isolant thermique emplissant l'espace tubulaire compris entre ces tubes sous vide industriel contrôlé ainsi qu'un enrobage extérieur de béton faisant office de lest. Le tube externe est constitué d'acier alors que le tube interne est réalisé en Invar.

Sur les conduites lestées classiques, si le lest extérieur vient à se briser, la canalisation est localement moins dense que l'eau et se soulève du fond. Ce phénomène une fois initié se propage spontanément le long de la conduite qui cède alors ou remonte à la surface.

On connaît par ailleurs par la demande de brevet français FR-A-2 746 891 une conduite thermiquement isolée pour le transport de produits pétroliers. Cette conduite comprend deux tubes coaxiaux et un isolant thermique emplissant partiellement l'espace tubulaire compris entre ces deux tubes sous vide industriel contrôlé.

L'invention a pour but de proposer une nouvelle conduite thermiquement isolée qui présente de nombreuses qualités. En particulier, l'invention a pour but de fournir une conduite offrant un haut niveau d'isolation thermique et de sécurité de fonctionnement.

A cet effet, l'invention a pour objet une conduite thermiquement isolée comprenant de l'intérieur vers l'extérieur :

- un premier tuyau étanche,
- une première couche d'isolation thermique,
- un second tuyau étanche,
- une seconde couche d'isolation thermique en matériau isolant,
- un lest en matériau de densité supérieure à celle de l'eau de mer,

caractérisée par le fait que ladite première couche d'isolation thermique est en matériau isolant, ladite conduite comprenant en outre une enveloppe protectrice étanche et résistante aux chocs à l'extérieur dudit lest.

La double couche d'isolation permet de minimiser l'amplitude des cycles thermiques subis par le second tuyau tout en conservant une seconde isolation capable d'isoler thermiquement le lest de béton et l'enveloppe d'acier d'un éventuel envahissement de la première isolation par le liquide.

Grâce à la superposition des deux tuyaux et de l'enveloppe protectrice, pour cette application comme pour d'autres applications industrielles analogues, la présente invention apporte une sécurité accrue de l'installation.

Même en cas de fracture du lest, celui-ci est maintenu par l'enveloppe et le poids apparent de la conduite s'en trouve inchangé, ce qui empêche que la conduite remonte ou se brise.

Préférentiellement, au moins un élément du groupe constitué par le premier tuyau, le second tuyau et l'enveloppe protectrice présente des caractéristiques mécaniques telles que :

$$Re > E.\ \alpha.\ \Delta T$$

- où $E$ est le module d'élasticité du matériau constitutif,
- $\alpha$ est le coefficient de dilatation thermique du matériau constitutif,
- $\Delta T$ est la différence entre la température de service dudit élément et la température ambiante,
- et $Re$ est la limite élastique du matériau à la température de service dudit élément.

Ces caractéristiques permettent, pour l'élément correspondant, de se passer éventuellement, de système de compensation de la contraction thermique. Ainsi pour le transport de gaz liquide, comme pour d'autres applications industrielles analogues, la présente invention propose une méthode particulièrement simple de rattrapage de la dilatation thermique.

Avantageusement, les deux tuyaux présentent ces caractéristiques.

De manière avantageuse, au moins l'un desdits tuyaux étanches est constitué d'un alliage à haute teneur en Nickel. Ces alliages, comme par exemple l'Invar, permettent d'obtenir les caractéristiques mécaniques ci-dessus.

Selon un mode de réalisation, le second tuyau étanche est réalisé en matériau composite à base de résine polymère. L'utilisation d'un tel matériau pour réaliser le second tuyau étanche engendre une réduction significative des coûts de fabrication de la conduite. De plus, les matériaux composites peuvent aussi être choisis de manière à présenter les caractéristiques mécaniques ci-dessus.

Avantageusement, les deux tuyaux et l'enveloppe externe satisfont ce critère, ce qui permet de réaliser une conduite éventuellement dépourvue de tout système de compensation de la contraction thermique.

Selon un autre mode de réalisation particulier, au moins l'un desdits tuyaux est muni d'au moins un système de compensation de la contraction thermique. Un tel système permet d'améliorer la reprise des effets thermiques.

Préférentiellement, ledit système de compensation de la contraction thermique se présente sous forme d'un manchon comprenant au moins une ondulation radiale.

De manière préférentielle, au moins un élément du groupe constitué par le premier tuyau, le second tuyau et l'enveloppe protectrice est ancré au niveau de ses extrémités à des butées fixes assurant la reprise des contraintes thermiques subies par ledit élément.

Avantageusement, le lest est constitué d'un matériau apte à être coulé sous une forme liquide, pulvérulente ou granulaire dans le volume cylindrique compris entre la seconde couche d'isolation et l'enveloppe protectrice. Préférentiellement, ledit lest comporte du béton à l'intérieur de l'enveloppe protectrice. Le béton est en effet facile à couler, l'enveloppe servant de moule. De plus, le béton est alors protégé du milieu extérieur par l'enveloppe d'acier, conférant à l'assemblage une bonne tenue au chocs ainsi qu'une parfaite étanchéité.

La constitution même du tuyau et le choix de la nature des matériaux contribuent à la réalisation et à l'exploitation aisée de l'invention. En effet, l'utilisation de béton permet de s'affranchir des contraintes d'assemblage rencontrées dans les techniques conventionnelles de réalisation. La coulée du béton dans une enveloppe d'acier permet également de tirer meilleur parti de la bonne résilience mécanique de l'acier et ainsi de réduire la sensibilité aux chocs de la conduite tout en permettant une inspection visuelle de l'enveloppe afin de détecter d'éventuels points de corrosion.

De manière encore plus préférentielle, un film de protection est disposé entre le lest de béton et ladite couche secondaire d'isolation thermique. Le film de protection a pour rôle d'empêcher l'invasion du laitier de béton dans la couche secondaire d'isolation lors de la coulée.

De manière avantageuse, ledit lest comporte au moins un conduit creux ménagé dans ce dernier, qui peut servir à la ventilation ou à l'assèchement. Préférentiellement, le conduit creux est disposé dans le sens longitudinal et sur toute la longueur de ladite conduite. Le conduit creux permet en outre d'évacuer l'eau exsudée du béton lors du séchage ou de détecter une éventuelle intrusion d'eau de mer. Il permet éventuellement aussi de faire circuler un gaz inerte.

De manière préférentielle, au moins une des couches d'isolation thermique est en matériau présentant une conductivité thermique inférieure à $20.10^{-3}W.m^{-1}.K^{-1}$ à température ambiante, de préférence inférieure à $16.10^{-3}W.m^{-1}.K^{-1}$ à -160°C. Les aérogels répondent généralement à ce critère.

Avec une telle isolation, le vide industriel contrôlé n'est plus obligatoire pour assurer une isolation thermique satisfaisante, ce qui évite de prévoir des appareillages de dépressurisation et un dimensionnement spécifique des conduites nécessaires à la mise en place du vide industriel contrôlé. L'invention permet donc de s'affranchir du vide industriel contrôlé évoqué précédemment par l'emploi de matériaux isolants à haute performance, et simplifie ainsi la mise en oeuvre et l'exploitation de la conduite.

Avantageusement, au moins une des couches d'isolation thermique est en matériau nano poreux de type aérogel. Un aérogel est un matériau solide de faible densité qui a une structure extrêmement fine et fortement poreuse (jusqu'à 90%). Il peut par exemple être fabriqué à partir de plusieurs matériaux comprenant la silice, l'alumine, le carbure d'hafnium ainsi que des variétés de polymères. Sa structure nanométrique lui confère des propriétés uniques d'isolant thermique étant donné que le parcours moyen des molécules de gaz et donc le transport d'énergie et de masse en son sein sont réduits. Il offre une conductivité thermique deux à quatre fois inférieure à celle d'autres isolants de type solide ou mousse isolante par exemple.

Selon un mode particulier de réalisation de l'invention, au moins une des couches d'isolation thermique est sous forme textile. Selon un autre mode particulier de réalisation de l'invention, au moins une des couches d'isolation thermique se présente sous une forme pulvérulente ou granulaire permettant sa coulée dans le volume destiné à l'accueillir. Par exemple, une telle couche d'isolation thermique peut être sous forme de billes. L'utilisation de matériaux pulvérulents ou granulaires permet de faciliter l'assemblage de la conduite, notamment en imposant des tolérances moins précises que dans les techniques antérieures de réalisation. En effet, ces matériaux autorisent un défaut de positionnement entre les tuyaux sans provoquer de discontinuité de l'isolation.

Plus préférentiellement, cette ou ces couche(s) d'isolation sous une forme pulvérulente ou granulaire comporte (nt) au moins un tronçon obturé à ses(leurs) deux extrémités longitudinales par des dispositifs d'obstruction en matériau isolant. Ces dispositifs d'obstruction peuvent être perméables aux gaz. Ces dispositifs d'obstruction peuvent aussi être traversés longitudinalement par des trous qui sont éventuellement bouchés par des filtres perméables aux gaz, de type tissu de verre par exemple. La perméabilité au gaz permet d'effectuer un balayage à l'azote par exemple.

De manière avantageuse, ladite couche d'isolation thermique sous forme pulvérulente ou granulaire comporte au moins une barre d'écartement en matériau isolant, d'épaisseur sensiblement égale à celle de ladite couche d'isolation thermique et disposée parallèlement à la dite conduite. Les barres d'écartement peuvent être perméables aux gaz.

Selon un mode particulier de réalisation de l'invention, un dispositif de détection des fuites, qui peut par exemple être une fibre optique, est disposé dans le sens longitudinal sur toute la longueur de ladite conduite entre le premier tuyau et l'enveloppe protectrice.

Avantageusement, la conduite est formée de tronçons préfabriqués pouvant être raccordés bout à bout. Au niveau de ces raccords, les couches d'isolation thermique sont avantageusement sous forme textile. L'enveloppe et les tuyaux étanches peuvent être raccordés à l'aide de pièces rapportées ou directement par un cordon de soudure.

Encore plus avantageusement, les tronçons présentent au moins une extrémité étagée, les éléments constitutifs desdits tronçons ayant une extension longitudinale décroissante les uns par rapport aux autres dans le sens radial vers l'extérieur. Cette configuration des tronçons ménage des dégagements facilitant leur assemblage.

L'invention fournit également une utilisation de la conduite ci-dessus pour le transport d'un fluide à basse température. Le fluide à basse température peut être par exemple du gaz liquéfié.

Selon un certain mode de réalisation, on fait circuler un gaz d'inertage dans au moins une des couches d'isolation thermique. Cependant, la circulation de gaz inerte est proposée dans un mode de réalisation préféré pour éviter la formation d'un mélange explosif par la mise en contact du gaz issu d'une éventuelle fuite et de l'air qui serait compris dans l'isolation thermique. La circulation de gaz inerte peut être effectuée à une pression supérieure à la pression atmosphérique.

L'invention a également pour objet un terminal maritime pour le transport de gaz liquéfié caractérisé par le fait qu'il comprend un poste de chargement et de déchargement relié à une installation à terre par au moins une conduite selon l'invention, les extrémités de ladite conduite pouvant être ancrées à des butées fixes. L'installation à terre est par exemple un parc de stockage de gaz liquéfié.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :

- la figure 1 est une vue de côté, de l'extrémité d'un tronçon de conduite selon un premier mode de réalisation de la présente invention ;
- la figure 2 est une vue partielle en coupe longitudinale du tronçon de conduite selon la figure 1 selon l'axe II-II ;
- la figure 3 est une vue agrandie d'une région de la figure 2 désignée par III ;
- la figure 4 est une coupe transversale du tronçon de conduite de la figure 2 selon la ligne IV-IV ;
- la figure 5 est une vue agrandie d'une région de la figure 4 désignée par V ;
- la figure 6 est une vue en perspective d'un tuyau intérieur du tronçon de conduite de la figure 1 présentant les dispositifs d'obstruction et les barres d'écartement;
- la figure 7 une coupe transversale de la conduite selon le premier mode de réalisation au niveau d'un raccord entre deux tronçons de conduite ;
- la figure 8 est une vue partielle agrandie du raccord de la figure 7 en coupe longitudinale selon la ligne VIII-VIII ;
- la figure 9 est une vue en perspective éclatée des différents éléments rapportés pour constituer un raccord à l'extrémité d'un tronçon de conduite;
- la figure 10 est schéma représentant la configuration d'un terminal maritime de transport de gaz liquéfié comportant la conduite selon le premier mode de réalisation ;
- la figure 11 est une vue longitudinale en quart de coupe d'une extrémité de conduite de la figure 10 ancrée dans une butée fixe ;
- la figure 12 est un diagramme représentant un profil de température en différents points de la conduite de la figure 10 ;
- la figure 13 est une vue partielle en coupe d'un système de compensation de la contraction thermique dans une conduite selon un deuxième mode de réalisation de l'invention et
- la figure 14 est une vue partielle agrandie d'un autre mode de réalisation du raccord de la figure 7 en coupe longitudinale selon la ligne XIV-XIV.

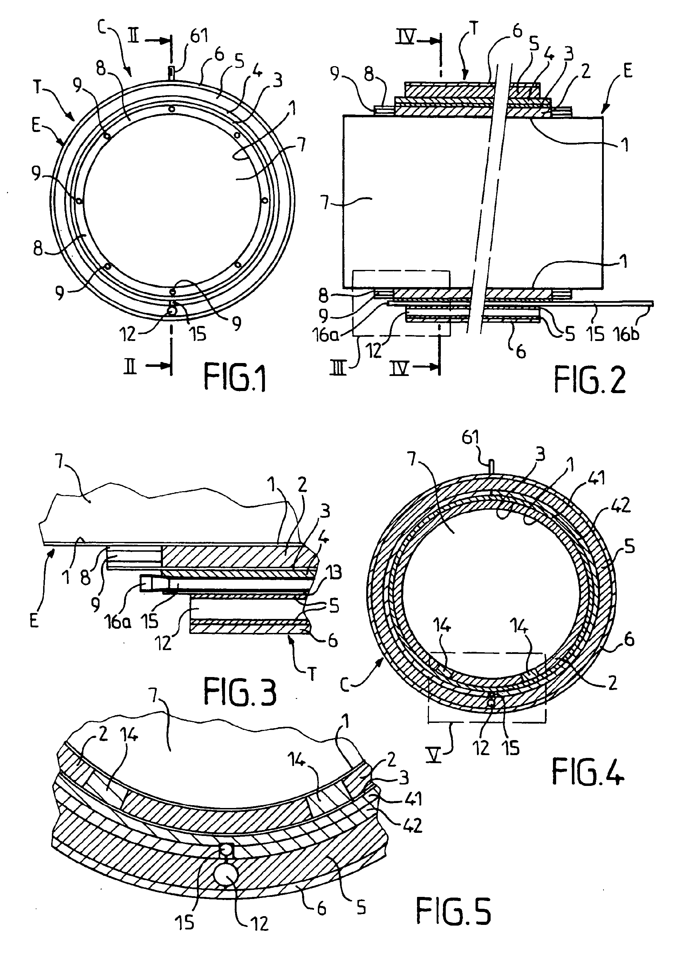

En référence aux figures 1 à 6, on décrit maintenant un tronçon T de la conduite C selon un premier mode de réalisation. Le tronçon T présente une structure multicouche avec, de l'intérieur vers l'extérieur, un premier tuyau étanche 1, une première couche d'isolation appelée couche primaire d'isolation 2, un second tuyau étanche 3, une seconde couche d'isolation appelée couche secondaire d'isolation 4, un film de protection 13, un enrobage de béton 5 et une enveloppe protectrice 6.

Les figures 1, 2 et 3, illustrent la configuration des extrémités E du tronçon T.

Selon la figure 2, un tronçon T comprend un premier tuyau 1, de forme cylindrique et de section circulaire. Ce premier tuyau 1 est étanche et constitué d'un matériau à faible coefficient de dilatation. Il peut par exemple être constitué d'Invar notamment disponible auprès de la société Imphy Alloys.

Le premier tuyau 1 laisse passer le fluide transporté, qui est préférentiellement du gaz liquéfié dans sa lumière 7. Il constitue une première barrière d'étanchéité vis-à-vis du fluide transporté.

Une couche primaire d'isolation 2 entoure le premier tuyau 1 au niveau de sa surface externe. Cette couche primaire d'isolation 2 est moins étendue longitudinalement que le tuyau primaire 1. Elle est constituée d'un matériau à faible conductivité thermique c'est à dire inférieure à $20.10^{-3}$ $W.m^{-1}.K^{-1}$ à température ambiante. Ce matériau peut par exemple être un aérogel dont la conductivité thermique est inférieure à $16.10^{-3}$ $W.m^{-1}.K^{-1}$ à -160°C. Préférentiellement, l'aérogel utilisé dans cette couche d'isolation 2 est sous forme de billes. Des billes d'aérogel appropriées sont notamment disponibles auprès de la société CABOT corporation.

Des dispositifs d'obstruction 8 de forme torique occupent l'extrémité de la couche primaire d'isolation 2, au niveau de chaque extrémité E des tronçons T.

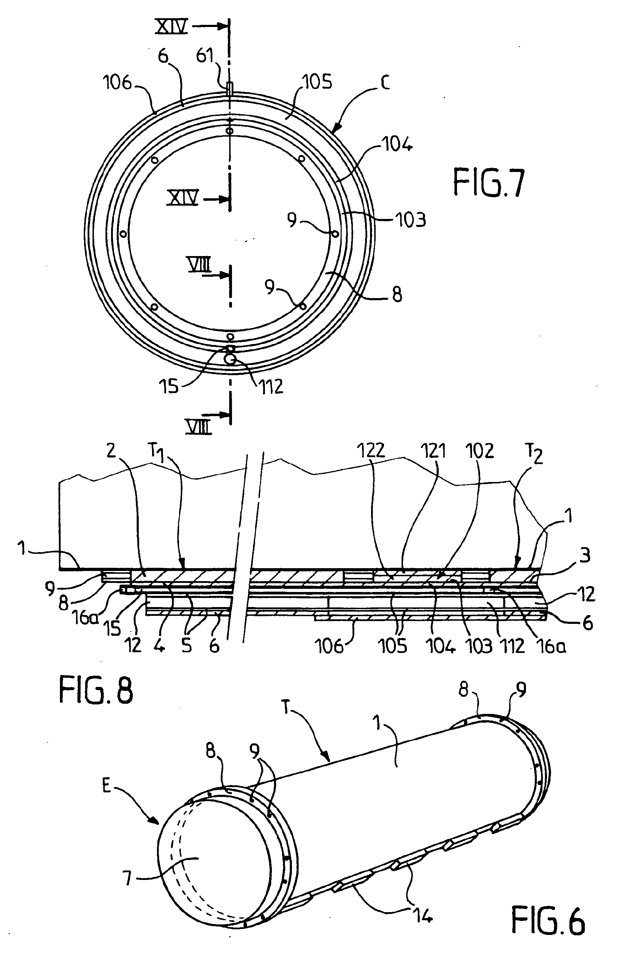

Comme visible sur les figures 4, 5 et 6, la couche primaire d'isolation 2 comporte longitudinalement, des paires de barres d'écartement 14 espacées dans la direction azimutale. Ces barres 14, selon les figures 4 et 5, sont espacées d'un angle sensiblement égal à 90° et sont situées de part et d'autre de la ligne génératrice inférieure de la couche primaire d'isolation 2. Selon la figure 6, chaque tronçon T présente cinq paires de barres d'écartement 14. Les dispositifs d'obstruction 8 et les barres d'écartement 14 sont préférentiellement constitués d'un matériau de conductivité thermique proche de celle de l'aérogel de la couche 2 et perméable aux gaz. Ce matériau peut par exemple être une mousse phénolique ou une mousse de polyuréthane.

Par conséquent, il ne se forme pas de ponts thermiques entre le premier tuyau 1 et les autres éléments du tronçon T.

En variante, les barres d'écartement 14 peuvent être espacées d'un angle différent et peuvent varier en nombre, en taille, en forme et en disposition dans le plan azimutal. L'on peut également envisager que ces barres d'écartement 14 se présentent sous forme d'un seul alignement longitudinal de tasseaux au niveau de la ligne génératrice inférieure de la couche primaire d'isolation 2.

La couche primaire d'isolation 2 sert à limiter les apports de chaleur du milieu extérieur vers le premier tuyau 1.

Les dispositifs d'obstruction 8 permettent de confiner les billes d'aérogel dans la couche primaire d'isolation 2. Un premier dispositif d'obstruction 8 est placé à l'une des extrémités de la couche primaire d'isolation 2 afin de former un vase étanche. Un second dispositif d'obstruction 8 est placé à l'autre extrémité de la couche primaire d'isolation 2 après avoir rempli cette dernière des billes d'aérogel.

Enfin, le soutien du premier tuyau 1 par le second tuyau 3 est assurée par au moins une barre d'écartement présente dans la couche primaire d'isolation 2, c'est à dire les paires de barres d'écartement 14 dans l'exemple représenté. En effet, lesdites barres d'écartement 14 permettent de transmettre le poids propre du premier tuyau 1 au second tuyau 3 sans endommagement de la couche primaire d'isolation 2.

Les dispositifs d'obstruction 8 sont préférablement perméables aux gaz ce qui permet de faire circuler un gaz d'inertage, pouvant être de l'azote, au sein de la couche primaire d'isolation 2, permettant d'éviter la formation d'un mélange explosif dû à la mise en contact du fluide transporté avec de l'air dans le cas d'une perte d'étanchéité du premier tuyau 1. Le balayage par le gaz d'inertage de la couche primaire d'isolation 2 peut être effectuée par injection de diazote à l'une des extrémités de la couche primaire d'isolation 2. La circulation du gaz inerte peut être effectuée par pressurisation à une des extrémités de la couche primaire d'isolation 2 et tirage à l'autre. L'inertage de la couche primaire d'isolation 2 peut permettre un contrôle du gaz présent dans cette couche 2 et par conséquent la détection d'une éventuelle fuite.

Selon la figure 1, chaque dispositif d'obstruction 8 est traversé longitudinalement par huit trous 9. Ces trous 9 sont bouchés par un matériau perméable aux gaz. Cependant, si les dispositifs d'obstruction 8 sont perméables aux gaz, les trous 9 sont alors facultatifs. Les trous 9, dont le nombre et la disposition peuvent varier dans les dispositifs d'obstruction 8 et bouchés par un matériau perméable aux gaz, tel que du tissus de verre collé, ont pour utilité de faciliter la circulation du gaz d'inertage tout en ne laissant pas s'échapper la couche primaire d'isolation 2, c'est à dire les billes d'aérogel.

Un second tuyau 3, également étanche et de section circulaire, est disposé autour de la couche primaire d'isolation 2 coaxialement au premier tuyau 1. Dans cet exemple de réalisation, le second tuyau 3, est constitué du même matériau et présente la même épaisseur que le premier tuyau 1. Il se différencie du premier tuyau 1 par le fait qu'il est moins étendu longitudinalement que le premier tuyau 1 à chaque extrémité E. L'on peut également constater que le second tuyau 3 présente la même longueur que la couche primaire d'isolation 2 sous-jacente. Ceci implique qu'un dégagement correspondant est prévu entre le premier tuyau 1 et le second tuyau 3.

Ce second tuyau 3 constitue également une barrière d'étanchéité vis-à-vis du fluide transporté en cas d'envahissement de la couche primaire d'isolation 2 par du gaz à la suite d'une fuite du premier tuyau 1.Le second tuyau 3 joue également un rôle dans la diminution de la contraction de la conduite C par rapport aux conduites classiques. En effet, étant constitué d'un matériau à faible coefficient de dilatation tel que l'Invar comme le premier tuyau 1, il se dilate beaucoup moins que tout autre métal et, comme le premier tuyau 1, permet d'éviter l'installation de moyens de compensation des contraintes de dilatations, par exemple de compensateurs en lyre ou à soufflets.

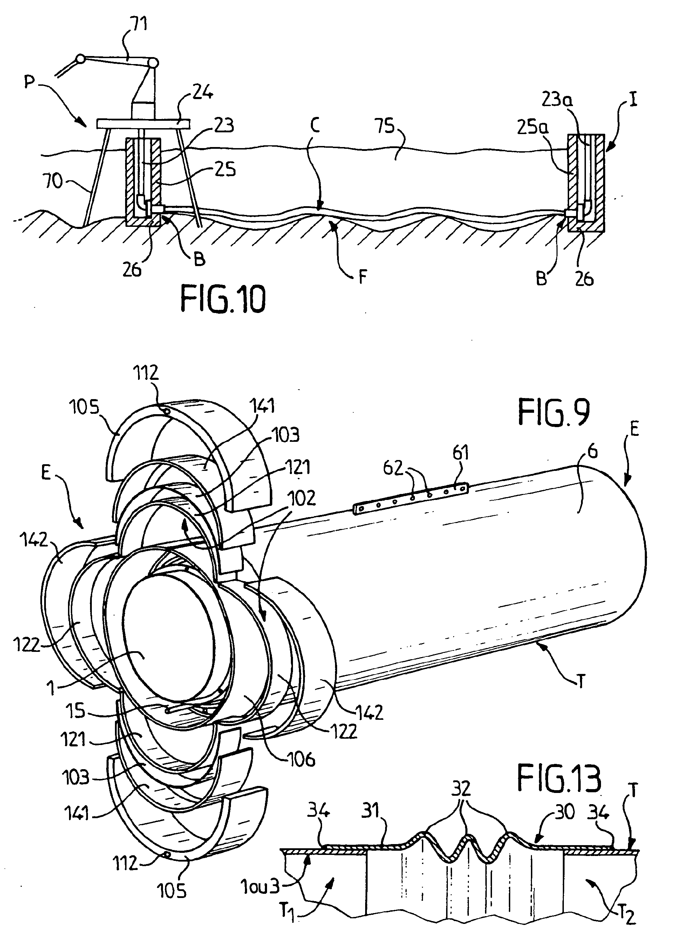

Une couche secondaire d'isolation 4 entoure le second tuyau 3. Cette couche secondaire d'isolation 4 est constituée de deux couches superposées, la couche interne 41 et la couche externe 42. Elles sont constituées d'un matériau à faible conductivité thermique qui peut par exemple être un matériau nano poreux en aérogel, préférentiellement sous forme textile de conductivité thermique de $12.10^{-3}$W.m$^{-1}$.K$^{-1}$ à -160°C. Ce matériau sera également avantageusement perméable aux gaz. Un tissu d'aérogel approprié est notamment disponible auprès de la société ASPEN aérogels. Chaque couche interne 41 ou externe 42 est constituée de deux demi-coques de manière similaire aux couches 141 et 142 représentées sur la figure 9. Selon un exemple particulier, l'épaisseur de la couche d'isolation interne 41 est de 19,2 mm et celle de la couche externe 42 de 22,4 mm. Les demi-coques formant la couche externe 42 sont dimensionnées, en épaisseur notamment, de façon à loger une gaine creuse 15 de section circulaire qui traverse longitudinalement le tronçon T sur toute la longueur, à la jonction inférieure des deux demi-coques constituant la couche externe 42. Cette gaine 15 est destinée à loger une fibre optique ou tout autre système de détection et de localisation de fuite. La gaine 15 présente une extrémité 16a évasée en forme de tulipe qui se raccorde avec l'autre extrémité 16b de la gaine 15 d'un tronçon T adjacent. La couche secondaire d'isolation 4 est moins étendue longitudinalement que le second tuyau 3. Ceci implique qu'un dégagement supplémentaire est prévu entre la couche d'isolation secondaire 4 et le second tuyau 3. La couche secondaire d'isolation 4 peut être constituée d'un nombre différent de couches, être constitué d'un autre matériau ou ne pas loger, dans son épaisseur, une gaine 15 pour fibre optique.

La couche secondaire d'isolation 4 sert à limiter les apports de chaleur du milieu extérieur vers le second tuyau 3. Elle sert également à isoler thermiquement l'extérieur du second tuyau 3 et permet d'éviter un refroidissement excessif de l'enveloppe protectrice 6 extérieure en cas d'invasion de la couche primaire d'isolation 2 par du gaz liquéfié consécutive à une fuite du premier tuyau 1. La couche secondaire d'isolation 4 est préférablement perméable aux gaz. Ceci implique que l'on peut également faire circuler un gaz d'inertage, pouvant être de l'azote, au sein de cette couche d'isolation 4 dans un but analogue à celui précédemment décrit pour la couche d'isolation 2.

La fibre optique, non représentée, préférentiellement placée dans la gaine 15, fait partie d'un dispositif de détection de fuite. Ce dispositif de détection et de localisation de fuite est un capteur linéaire de température à fibre optique (DTS : distributed température sensor) utilisé pour détecter et localiser tout point froid anormal au sein de la couche externe 42 dû à une éventuelle fuite de gaz liquéfié. La fibre optique est placée dans la gaine 15 une fois que la conduite C est assemblée. Elle pourra être tirée le long de la conduite avec une fibre d'aramide par exemple, ou pourra être poussée avec de l'air comprimé. Elle pourra être remplacée de la même manière qu'elle a été mise en place, sans intervention sur la conduite C, en la tirant par exemple avec la même fibre d'aramide le long de la conduite. On peut également envisager de mettre en place un tel dispositif de localisation de fuite lors de la jonction des tronçons. Le positionnement de la fibre optique est préférable dans la couche externe 42 de la couche secondaire d'isolation 4 pour plusieurs raisons. Tout d'abord, à cet emplacement, en cas d'éventuelle fuite, la fibre optique détecte des variations d'amplitudes significatives et elle ne subit pas des cycles thermiques trop amples qui pourraient nuire à son fonctionnement. Enfin, à ce positionnement, l'amplitude du signal de la fibre optique reste acceptable malgré la basse température.

Une enveloppe protectrice 6, également de section circulaire, est disposée coaxialement autour de la couche secondaire d'isolation 4, à distance de celle-ci. L'enveloppe protectrice 6 est munie, au niveau de sa ligne génératrice supérieure, de dispositifs de levage 61. Selon la figure 9, les dispositifs de levage 61 sont sous forme d'une barre de longueur inférieure à celle du tronçon T, disposée dans le sens longitudinal du tronçon T et à mi-distance des extrémités E. Les dispositifs de levage 61 sont traversés transversalement d'orifices 62. L'enveloppe protectrice 6 est en acier muni d'une surépaisseur et d'un revêtement anti-corrosion pour limiter ainsi la corrosion par l'eau de mer. La surépaisseur permet aussi de protéger la conduite C d'éventuels chocs extérieurs.

Les dispositifs de levage 61, quand à eux, permettent à la conduite C d'être soulevée et manipulée par l'intermédiaire de leurs orifices 62. L'enveloppe protectrice 6 est moins étendue longitudinalement que la couche secondaire d'isolation 4, ceci créant un dégagement supplémentaire entre l'extérieur de la conduite C et la couche secondaire d'isolation 4.

Un film de protection 13 peut être placé autour de la couche secondaire d'isolation 4 afin d'éviter son envahissement par le béton.

Un enrobage de béton 5 est coulé et comble l'espace tubulaire compris entre la partie centrale de la conduite (tuyau 1, couche d'isolation 2, tuyau 3, couche d'isolation 4 et éventuel film de protection 13) et l'enveloppe protectrice 6. Un conduit creux 12 est disposé dans le sens longitudinal et sur toute la longueur du tronçon T. Ce conduit creux 12 peut présenter une section circulaire.

L'enrobage de béton 5 permet de donner une densité totale du tuyau vide supérieure à celle de l'eau de mer pour que la conduite C repose naturellement sur le fond de l'eau à l'état vide (densité du béton chargé de l'ordre de 3). La masse apparente du tuyau immergé doit être supérieure à 10 kg par mètre. Ceci limite les mouvements subis par la conduite C et donc son endommagement. Le conduit creux 12 permet non seulement de purger l'infiltration d'eau de mer dans l'enrobage de béton 5 à la suite d'une éventuelle fuite de l'enveloppe protectrice 6 qui l'entoure, mais encore d'évacuer l'eau issue du séchage du béton coulé et éventuellement aussi de faire circuler un gaz inerte. Le conduit creux 12 a pour fonction l'assèchement ou la ventilation de la conduite.

Le film de protection 13 éventuellement placé autour de la couche secondaire d'isolation 4 a pour fonction de protéger cette dernière d'un envahissement par le laitier de béton 5 lors de sa coulée dans l'enveloppe protectrice 6. Il doit également protéger la couche secondaire d'isolation 4 de l'effet abrasif de l'enrobage de béton 5 et du frottement éventuel entre la couche secondaire d'isolation 4 et l'enrobage de béton 5 dû aux différences de contraction thermique lors du passage de gaz liquide.

La conduite C est formée de tronçons T raccordés bout à bout au niveau des extrémités E. Les tronçons T mesurent par exemple quatre mètres de long. Ils sont raccordés bout à bout pour former une conduite C de la longueur souhaitée, par exemple d'environ 5000 m. La longueur des tronçons T et leur nombre peut évidemment varier selon les applications. Comme il l'a été précédemment décrit, les différents éléments composant un tronçon T présentent, les uns par rapport aux autres, une extension longitudinale qui se réduit dans le sens radial vers l'extérieur. Cette structure étagée des extrémités E du tronçon T permet de faciliter les opérations de soudures des différents tronçons T entre eux. En effet, cette structure crée des dégagements qui facilitent l'accès aux structures les plus profondes comme par exemple au premier tuyau 1. Le dégagement ainsi crée permettra également l'apport de pièces rapportées pour les soudures et le positionnement de couches de matériaux d'isolation au niveau des raccords.

La structure d'un raccord entre deux tronçons T est représentée par les figures 7, 8 et 9.

Les premiers tuyaux 1 des deux tronçons T1 et T2 adjacents sont soudés bout à bout par un cordon de soudure.

Puis deux couches d'isolation primaire 102 sont disposées autour de la soudure des premiers tuyaux 1 : la couche interne 121 et externe 122 d'isolation primaire. Les couches interne 121 et externe 122 d'isolation primaire sont formées chacune d'une paire de demi-coques, représentées sur la figure 9, constituées de matériau isolant, par exemple sous forme textile qui peut être de l'aérogel. Les plans de jonction des deux paires de demi-coques sont perpendiculaires l'un à l'autre.

Ensuite les seconds tuyaux 3 des deux tronçons T1 et T2 sont soudés entre eux à l'aide de pièces rapportées qui sont, selon le mode de réalisation représenté, sous la forme de demi-coques 103, mais qui peuvent être également sous la forme d'une bague fendue. Les deux demi-coques 103 en Invar sont soudées de manière étanche aux seconds tuyaux 3 par des cordons de soudure périphériques et l'une à l'autre par des cordons de soudure longitudinaux.

Puis deux couches d'isolation secondaire 104 sont disposées autour des demi-coques 103 qui raccordent les seconds tuyaux 3 : la couche interne 141 et externe 142 d'isolation secondaire. Les couches interne 141 et externe 142 d'isolation secondaire ont la même constitution que les couches interne 121 et externe 122 d'isolation primaire précédemment citées. La couche externe 142 d'isolation secondaire laisse passer la gaine 15 au niveau de la jointure inférieure de ses deux demi-coques. Par ailleurs, la gaine 15 de la fibre optique est glissée dans cette jointure après soudure des demi-coques 103 pour ne pas gêner cette soudure. L'utilisation de paires de demi-coques préformées pour les couches d'isolation primaire 102 et secondaire 104 permet de simplifier les opérations de manutention et de mise en place de l'isolation. L'utilisation de paires de demi-coques de couleurs différentes en simplifie davantage la pose.

Puis une paire de demi-coques de béton 105 est disposée autour des couches secondaires d'isolation 104. Chaque demi-coque 105 est traversée longitudinalement par un conduit creux 112 au niveau de sa ligne génératrice supérieure. Le conduit creux 112 de la demi-coque inférieure permet de relier les conduits creux 12 des tronçons T1 et T2 successifs.

Un film de protection 13 qui n'est pas représenté sur la figure 9 peut optionnellement être rapporté entre les couches secondaires d'isolation 104 et les demi-coques de béton 105.

Enfin les enveloppes protectrices 6 des deux tronçons T1 et T2 sont raccordées à l'aide d'une pièce rapportée externe qui est, de manière avantageuse, sous la forme d'une bague fendue 106 appariée au tube adjacent 6 de plus grand diamètre. La bague fendue 106 est amenée longitudinalement le long d'un des tronçons jusqu'au niveau du raccord pour être soudée aux extrémités des enveloppes protectrices 6 des tronçons T1 et T2 adjacents par deux cordons de soudure périphériques étanches.

Exemple particulier de dimensionnement

Le diamètre interne du premier tuyau 1 est de 800 mm et son épaisseur de 3 mm. Le diamètre intérieur est justifié par les premières estimations de perte de charge. L'épaisseur du premier tuyau 1 a été échantillonnée à 3 mm en fonction de la pression d'arrêt des pompes d'un méthanier en admettant une contrainte égale à 66% de la limite élastique.

L'épaisseur de la couche primaire d'isolation 2 est de 40 mm. Le second tuyau 3 a un diamètre externe de 892 mm et il est moins étendu longitudinalement que le premier tuyau 1 de 150 mm au niveau de chaque extrémité E.

La couche secondaire 4, également d'une épaisseur de 40 mm est moins étendue longitudinalement que le second tuyau 3 de 100 mm au niveau de chaque extrémité E.

L'enveloppe protectrice 6 présente une épaisseur d'environ 16 mm.

L'enrobage de béton 5 présente une épaisseur d'environ 55 mm et le conduit creux 12 présente un diamètre d'environ 40 mm.

Pour un tronçon T de 4000 mm, la longueur du premier tuyau 1 est de 4000 mm, celle de la couche primaire d'isolation 2 et du second tuyau 3 de 3700 mm, celle de la couche secondaire d'isolation 4, du film de protection 13, et de l'enveloppe protectrice 6 de 3500 mm et celle de l'enrobage en béton de 3480 mm.

Comme illustré sur la figure 10, on décrit maintenant un terminal maritime dans lequel la conduite C décrite précédemment est utilisée pour l'acheminement de gaz liquéfié entre un poste de chargement et de déchargement P et une installation à terre I. Le chiffre 75 désigne le niveau de la mer.

On appelle poste de chargement et de déchargement P une installation fixe off-shore. Le poste de chargement et de déchargement P comporte un bras mobile 71, une plate-forme 24 supportée par des piliers 70, qui supporte le bras mobile 71. Une tour fixe 25 en béton est construite sous la plate-forme 24. Le bras mobile 71 porte un manchon (non représenté sur la figure 10) pouvant se connecter aux canalisations de chargement/déchargement d'un méthanier selon la technique connue. Le bras mobile 71 est relié à une conduite de liaison 23 qui s'étend entre la plate-forme 24 et le fond de l'eau F à l'intérieur de la tour fixe 25. Dans le fond de la tour fixe 25, la conduite de liaison 23 est reliée à la conduite C par une pièce de butée fixe B noyée dans le béton 26.

Le poste de chargement et de déchargement P, par l'intermédiaire de son bras mobile 71 orientable qui s'adapte à tous les gabarits de méthaniers, permet le chargement ou le déchargement du méthanier (non représenté) en liquide.

L'installation à terre I comporte également une conduite de liaison 23a qui est reliée à des cuves de stockage de gaz liquéfié (non représentées) et qui s'étend jusqu'au fond de l'eau F à l'intérieur d'une tour fixe 25a. Dans le fond de la tour fixe 25a, la conduite de liaison 23a est également reliée à la conduite C par une pièce de butée fixe B noyée dans le béton 26. Les conduites de liaison 23 et 23a non immergées peuvent être conçues selon la technique connue, par exemple sous forme de tuyaux en acier inoxydable revêtus d'une isolation adéquate et munis de systèmes de compensation.

Les extrémités de la conduite C sont ancrées à des pièces de butée fixes B au niveau d'un poste de chargement ou de déchargement P et d'une installation à terre I.

La conduite C qui relie le poste de chargement et de déchargement P et l'installation à terre I, repose sur le fond de l'eau F. Elle permet le transfert du gaz liquéfié entre le poste de chargement ou de déchargement P et l'installation à terre I sur une grande distance, par exemple 5 km, ce qui permet de placer le poste P à grande distance de la côte. Deux conduites C dimensionnées selon l'exemple ci-dessus peuvent transporter le gaz liquéfié à un débit de 6000 m$^3$/h, ce qui permet le transfert d'une cargaison d'un méthanier de 144000 m$^3$ en douze heures.

Une conduite C selon l'invention peut également être prévue entre le poste de chargement et de déchargement P et l'installation à terre I pour acheminer du gaz sous forme vapeur. Elle est fonctionnellement différente mais physiquement identique aux deux conduites précitées, qui transportent du gaz liquéfié. Cette conduite sert, pendant le déchargement du méthanier, à acheminer vers le méthanier, le volume de gaz sous forme vapeur nécessaire pour remplacer le volume du gaz liquide que l'on décharge.

La pose de la conduite C comprend les étapes de pré assemblage sur terre des tronçons T, puis d'assemblage en mer des tronçons T pré-assemblés et du raccordement de la conduite C aux pièces de butée fixes B. Afin de minimiser le nombre d'opérations d'assemblage en mer, un pré-assemblage des tronçons T de 4 mètres en ensembles de 40 à 60 mètres par exemple peut être effectué. Puis l'assemblage des tronçons T pré assemblés de 40 à 60 mètres peut être envisagé à partir d'une barge assurant une pose en S. La barge doit être équipée d'un stinger afin de supporter la portion de conduite C en suspension entre le fond de l'eau F et la barge. Une installation à partir de la terre peut également être envisagée.

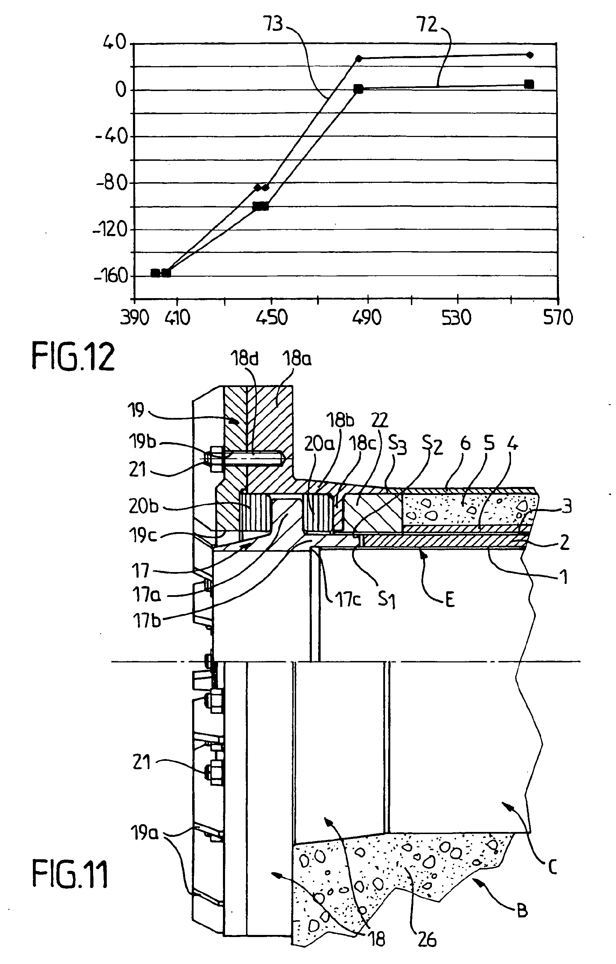

Le raccordement de la conduite C aux pièces de butée fixes B est représenté sur la figure 11. Chaque pièce de butée fixe B est composée de différents éléments qui sont : une bride interne 17, une bride externe 18 et un couvercle 19.

La bride interne 17 comporte un tuyau 17b dont la surface interne présente un épaulement 17c et la surface externe présente un rebord périphérique radialement saillant 17a. Le diamètre extérieur est décroissant à partir du rebord 17a en direction de l'extrémité tournée vers le couvercle 19.

La bride externe 18 comporte trois parties : un tuyau 18b, un rebord périphérique radialement externe 18a à son extrémité tournée vers le couvercle 19 et un rebord annulaire radialement interne 18c entre les deux extrémités du tuyau 18b. Le diamètre intérieur du rebord annulaire 18c correspond sensiblement au diamètre extérieur de la portion du tuyau 17b située entre le rebord 17a et l'extrémité tournée vers la conduite C. La bride externe 18 comporte une série de goujons filetés 18d disposés sur la face du rebord 18a tournée vers le couvercle 19. Le diamètre externe de la bride externe 18 est légèrement décroissant dans la partie comprise entre le rebord 18a et l'extrémité S3 reliée avec l'enveloppe protectrice 6 de la conduite C

Le couvercle 19 a sensiblement la forme d'un disque traversé longitudinalement par des orifices 19b disposés sur un cercle concentrique à l'axe de révolution du couvercle. Le couvercle 19 présente également une ouverture centrale 19c dont le diamètre correspond sensiblement au diamètre externe du tuyau 17b. Le couvercle 19 présente également des nervures 19a saillantes sur sa face opposée à la bride externe 18 qui favorisent les échanges thermiques d'une part et rigidifient le couvercle 19 d'autre part.

Enfin, du béton 26 entoure la surface externe du tuyau 18b et de l'extrémité E de la conduite C qui lui est raccordée.

On décrit maintenant l'assemblage de la conduite C à la pièce de butée fixe B.

L'extrémité E de la conduite C est assemblée à la pièce de butée fixe B préférentiellement hors de l'eau, puis l'ensemble est immergé après mise en place d'un bouchon pour être fixé dans le béton. Tout d'abord, l'extrémité E de la conduite C est enfoncée dans la lumière du tuyau 17b de la bride interne 17 sans atteindre l'épaulement 17 c. L'extrémité du premier tuyau 1 est soudée à la surface interne du tuyau 17b entre l'extrémité S1 et l'épaulement 17c. Le second tuyau 3 est quand à lui soudé à la surface externe du tuyau 17b entre l'extrémité S2 et le rebord radialement interne 18c de la bride externe 18, l'épaisseur du tuyau 17b sur cette portion correspondant exactement à l'épaisseur comprise entre le premier tuyau 1 et le second tuyau 3.

Un élément isolant 22 est placé dans l'espace défini entre le rebord 18c et l'extrémité de la couche secondaire d'isolation 4 et de l'enrobage en béton 5. L'élément isolant 22 permet de prolonger l'isolation de la couche secondaire d'isolation 4 et de l'enrobage en béton 5 au sein de la bride externe 18.

La bride interne 17 est positionnée longitudinalement par rapport à la bride externe 18 en intercalant une première cale de positionnement 20a entre le rebord radialement interne 18c et le rebord radialement externe 17a de la bride interne 17. Une soudure est effectuée au niveau de l'extrémité S3 solidarisant l'enveloppe protectrice 6 et la bride externe 18. Une seconde cale de positionnement 20b est placée contre le rebord 17a à l'opposé de la première cale de positionnement 20a.

Le couvercle 19 est alors placé contre la seconde cale de positionnement 20b et le rebord radialement externe 18a en engageant les goujons 18d à travers les orifices 19b. Puis le couvercle 19 est maintenu en appui par des écrous 21 vissés sur les goujons 18d. Le couvercle 19, en appui contre la cale 20b, assure l'immobilisation de la bride interne 17 dans la bride externe 18.

Le montage de la butée fixe B peut également être envisagé sous l'eau.

Ainsi par cet ancrage des deux extrémités E de la conduite C dans les pièces de butée fixe B, la conduite C est apte à être mise en extension entre les postes de chargement et de déchargement P et l'installation à terre I sans prévoir de dispositifs de compensation de la rétraction thermique. Il en résulte une réduction des pertes de charges et une amélioration du débit transporté. Les pièces de butée fixe B sont conçues et fixées de manière à résister aux contractions thermiques dues au transport du gaz liquéfié. Les butées fixes B constituent alors des éléments de reprise des efforts thermiques. Les efforts de traction dus à la mise en froid des tuyaux 1 et 3 et éventuellement au refroidissement de l'enveloppe protectrice 6 extérieure - dont la température suit celle du milieu environnant - sont partiellement compensés - lors du déchargement - par l'effet de fond qui correspond à la perte de charge dans le tuyau 1 appliquée à la section de passage. Cependant les contraintes dues à l'effet de fond sont faibles par rapport à celles dues à la rétractation des matériaux.

Les dimensions décrites dans l'exemple ci-dessus ne sont bien sur ni impératives, ni limitatives et doivent être adaptées à chaque fois, aux contraintes imposées par l'application visée.

On décrit maintenant une méthode de dimensionnement des tubes à section circulaire soumis à une pression interne ou externe qui sont, dans le cas de la conduite C, les tubes étanches 1 et 3 et l'enveloppe protectrice 6.

On connaît la pression interne (Pint) et externe (Pext) auxquelles est soumis un tube. On peut alors calculer une épaisseur minimale (eMin) par la formule suivante :

$$eMin = \frac{Peff \times d}{2A \times Rpe} + C$$

dans laquelle :

$$Peff = \left| (P\text{int} - Pext) \right|$$

$$Rpe = \frac{Re}{S}$$

avec

 d : diamètre intérieur du tube (mm)
 Peff : pression différentielle (MPa)
 Rpe : Résistance pratique à la traction du matériau (MPa)
 Re : Résistance élastique du matériau (MPa)
 S : coefficient de sécurité > 1
 A : coefficient d'assemblage qui dépend du procédé de mise en forme du tube.
 C : Surépaisseur de corrosion (mm)

Exemple : le tableau 1 en annexe donne un exemple de dimensionnement conduite C sous marine à une profondeur de 35 m. La pression interne de dimensionnement utilisée est une pression de 1,5 fois la pression d'arrêt des pompes du méthanier qui refoule le liquide, c'est à dire 15 bars. Cette pression de 15 bars est prévue pour être supportée par le premier tuyau 1, et éventuellement par le second tuyau 3 qui doit résister à cette pression si le premier tuyau 1 cède. L'enveloppe protectrice 6 doit résister au double de la pression d'immersion c'est-à-dire environ 7 bars. La pression interne de l'enveloppe protectrice 6 sous l'eau est la pression atmosphérique car l'espace situé entre le tuyau 3 et l'enveloppe 6 communique avec l'atmosphère à travers la pièce de butée B. Sa pression externe, due à l'immersion sous 30 m d'eau et 5 m de marnage est d'environ 3,5 bars.

Les épaisseurs minimum eMin calculées pour résister à la pression interne au niveau de chaque tuyau sont de 1,49 mm pour le premier tuyau 1 et de 1,75 mm pour le second tuyau 3. L'épaisseur minimale prévue pour l'enveloppe protectrice 6 est de 2.63 mm quand la conduite C est immergée à 30 m sous l'eau.

Cependant, en pratique et pour des raisons de sécurité, dans l'exemple numérique ci-dessus, des épaisseurs de 3 mm pour le premier tuyau 1 et le second tuyau 3 et de 16 mm pour l'enveloppe protectrice 6 ont été choisies.

Le profil de température dans l'épaisseur de la conduite C conforme à l'exemple numérique ci-dessus utilisée pour le transport sous-marin de méthane liquide, est représenté sur la figure 12. Ce diagramme représente la température de service (en °C) en fonction de l'éloignement par rapport au centre de la conduite C (en mm). La température de service est la température au sein des différents éléments de la conduite lors du transport de gaz liquide. La courbe 72 représente le cas où la température extérieure à la conduite C est de 4°C. La courbe 73 représente le cas où la température extérieure à la conduite C est de 30°C.

Les deux courbes présentent une même évolution générale. La température augmente du centre de la conduite C vers l'extérieur. Chaque courbe est composée de six points. Le premier point de chaque courbe, à la température d'environ -160°C représente la température à l'intérieur du premier tuyau 1, le deuxième point : celle à l'extérieur du premier tuyau 1, le troisième point : celle à l'intérieur du second tuyau 3, le quatrième point : celle à l'extérieur du second tuyau 3, le cinquième point : celle à l'extérieur de l'enrobage de béton 5 et le sixième point : celle à l'extérieur de l'enveloppe protectrice 6, c'est à dire celle du milieu marin environnant.

Entre le deuxième et le troisième point des courbes 72 et 73, le gradient température est important. Cela signifie que la couche primaire d'isolation 2 joue bien son rôle d'isolant thermique.

Au niveau des troisième et quatrième points des courbes 72 et 73, la température est d'environ -100°C pour la première courbe 72 et de - 85°C pour la deuxième 73. On constate que les températures au niveau du second tuyau 3 sont encore très froides.

Entre le quatrième et le cinquième point des courbes 72 et 73, on constate que le gradient est encore plus important qu'au niveau de la couche primaire d'isolation 2. Ceci signifie que la couche secondaire d'isolation 4 est légèrement plus efficace que la couche primaire d'isolation 2.

Enfin, au niveau des cinquième et sixième points des courbes 72 et 73, le gradient température est quasiment nul. Cela signifie que l'enrobage de béton 5 et l'enveloppe 6 ne jouent pas de rôle substantiel dans l'isolation de la conduite C.

On décrit maintenant un second mode de réalisation de la conduite C, dans lequel les effets thermiques de rétraction du premier tuyau 1 ou du second tuyau 3 lors du transport de gaz liquéfié sont repris par des mécanismes de compensation le long de la conduite C.

La structure des tronçons T selon le deuxième mode de réalisation est identique à celle des tronçons T selon le premier mode de réalisation. La structure des tronçons T selon le deuxième mode de réalisation est donc illustrée par les figures 1 à 5.

La conduite C selon le deuxième mode de réalisation comporte des raccords entre tronçons qui diffèrent des raccords du premier mode de réalisation car ils comprennent des systèmes de compensation de la contraction thermique 30 reliant entre eux les premiers tuyaux 1 et/ou les seconds tuyaux 3.

Un système de compensation de la contraction thermique 30 est représenté partiellement sur la figure 13. Il s'agit d'un manchon 31 tubulaire qui présente au niveau de ses deux extrémités, un diamètre interne correspondant au diamètre externe des premiers tuyaux 1 ou des seconds tuyaux 3 devant être reliés. Cette dernière caractéristique permet au manchon 31 d'accueillir les extrémités des premiers tuyaux 1 ou des seconds tuyaux 3. Les extrémités 34 du manchon 31 sont alors soudées par un cordon de soudure périphérique étanche à la surface des premiers tuyaux 1 ou des seconds tuyaux 3. Sur la figure 13, le manchon 31 relie deux premiers tuyaux 1 ou seconds tuyaux 3 appartenant à deux tronçons T1 et T2 adjacents.

Le manchon 31 est constitué d'un matériau permettant un assemblage adapté par collage ou soudage par exemple aux tuyaux 3 adjacents. Il présente au moins une ondulation radiale périphérique 32 en forme d'accordéon dans sa position centrale, c'est à dire trois ondulations 32 dans l'exemple représenté. Lors du transport du gaz liquéfié, la structure formée par les ondes 32 s'étire et se tasse au gré des déformations du tuyau correspondant dues aux variations de température. Le manchon 31 constitue donc un élément de reprise locale des effets thermiques.

Dans les raccords du second mode de réalisation, les systèmes de compensation de la contraction thermique 30 sont disposés à cheval sur les seconds tuyaux 3 de deux tronçons adjacents T1 et T2 c'est à dire à la place des pièces rapportées 103 du premier mode de réalisation et/ou entre les premiers tuyaux 1. Les autres éléments composant le raccord (couches d'isolation primaire 102 et secondaires 104, enrobage béton 105 et bague fendue 106 de l'enveloppe protectrice 6) sont identiques à ceux du premier mode de réalisation.

Le deuxième mode de réalisation de la conduite C est avantageux en ce qu'il permet que le premier 1 et/ou le second 3 tuyaux soient constitués en matériau qui n'a pas un faible coefficient de dilatation contrairement au premier mode de réalisation, par exemple en acier inoxydable, en divers alliages ou en matériaux composites. Il en résulte un avantage économique. Dans ce cas, les systèmes de compensation sont utilisés dans les tuyaux en Inox ou en autre matériau dilatable. Les tuyaux non constitués d'un matériau de faible coefficient de dilatation, se rétractent longitudinalement intensément lors de la mise en froid ce qui, en l'absence d'une compensation appropriée, pourrait avoir pour conséquence l'arrachement de l'ancrage des extrémités de la conduite C ou la propre déchirure du tuyau si l'ancrage résistait à ces contraintes.

Cependant, sur un tuyau en matériau dilatable, des raccords selon les figures 7 à 9 peuvent être également utilisés en alternance avec des systèmes de compensation 30. La structure des raccords sans système de compensation 30 est alors identique à celle du premier mode de réalisation, mis à part que la paire de demi-coques 103 pour souder le second tuyau 3 est en un matériau non nécessairement à faible dilatation thermique, mais compatible au mode d'assemblage.

Dans le deuxième mode de réalisation, il est aussi possible d'utiliser des tuyaux 1 et 3 en Invar. Il est également envisageable dans ce deuxième mode de réalisation de concevoir une conduite C dont l'un des tuyaux 1 ou 3 est en matériau de faible coefficient de dilatation et l'autre ne l'est pas. Un calcul complet par éléments finis permet au cas par cas de décider sur la nécessité ou non d'une reprise locale des effets thermiques.

Les extrémités des conduites C selon le deuxième mode de réalisation peuvent également être ancrées par butées fixes B à un poste de chargement et de déchargement P et à une installation à terre I de manière identique à celle du premier mode de réalisation en référence aux figures 10 et 11.

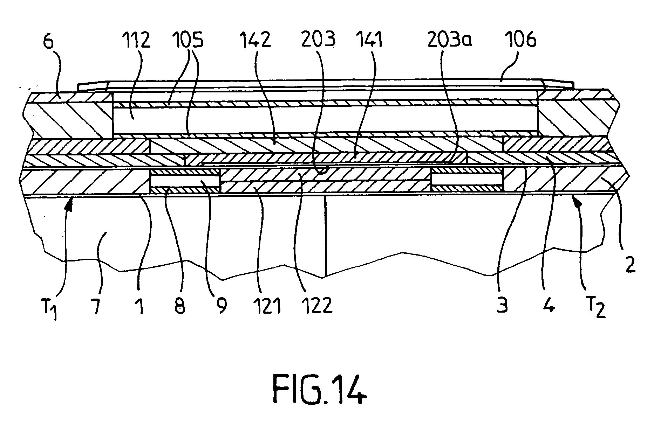

On décrit maintenant un troisième mode de réalisation illustré sur la figure 14.

Dans l'exemple de dimensionnement exposé précédemment, on a jugé nécessaire que le second tuyau 3 soit capable de supporter 1,5 fois la pression d'arrêt des pompes. Cette exigence peut paraître trop sévère sous l'hypothèse qu'une rupture franche du premier tuyau 1 est hautement improbable, seules des éventuelles fuites ou zones de porosité du tuyau 1 devant être envisagées en pratique.

On peut alors dimensionner de façon plus modeste le second tuyau 3 et envisager par exemple une pression efficace de dimensionnement de 0,2 MPa. Certains tubes en matériaux composites peuvent aisément répondre à ce besoin.

Dans ce troisième mode de réalisation, la conduite peut différer des conduites décrites dans les modes de réalisation précédents par le fait qu'elle comporte un second tuyau 3 réalisé en matériau composite. Les extrémités des seconds tuyaux 3 adjacents, selon ce dernier mode de réalisation, sont alors reliés par un couvre joint 203 en matériau composite souple, par exemple le Triplex (marque déposée), dont les extrémités 204a recouvrent et sont adhérisées à la surface externe des extrémités des seconds tuyaux 3 adjacents.

Le matériau composite est constitué par exemple d'une résine polymère armée de fibres, par exemple une résine de polyester ou epoxy renforcée de fibres de verre ou de carbone, éventuellement tissées. Le matériau composite peut par ailleurs être composé de manière à présenter des propriétés mécaniques vérifiant le critère : Re> E. $\alpha$. $\Delta$T.

Le Triplex est un matériau comportant trois couches, à savoir deux couches externes de tissus de fibre de verre et une couche intermédiaire de feuille métallique mince. Le Triplex est notamment commercialisé par la société Hutchinson.

Les autres caractéristiques identiques de la conduite portent les mêmes références que dans les modes de réalisations précédents. La configuration générale des différents éléments et l'utilisation de la conduite restent inchangées dans le présent mode de réalisation.

L'utilisation de seconds tuyaux 3 en matériau composite permet une réduction significative du coût de fabrication des conduites.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Tableau 1 : exemple de dimensionnement pour une conduite C sous marine à une profondeur de 35 m.

| | $P_{int}$ (MPa) | $P_{ext}$ (MPa) | $P_{eff}$ (MPa) | D (mm) | A | C % | S | $R_e$ (MPa) | $R_{pe}$ (MPa) | $e_{Min}$ (mm) | |
|---|---|---|---|---|---|---|---|---|---|---|---|
| Premier tuyau 1 | 1,6 | 0,1 | 1,5 | 800 | 0,9 | 0.00 | 1,5 | 670 | 446,67 | 1,49 | à Froid |
| Second tuyau 3 | 1,6 | 0,1 | 1,5 | 886 | 0,9 | 0.00 | 1.11 | 470 | 423 | 1.75 | A 20°C |
| Enveloppe protectrice 6 | 0.1 | 0.45 | -0.35 | 1118 | 0.9 | 0.33 | 2 | 215 | 107.5 | 2.63 | A 20°C |

**Revendications**

1. Conduite (T, C) thermiquement isolée comprenant de l'intérieur vers l'extérieur :

   un premier tuyau (1) étanche,

   - une première couche d'isolation thermique (2),
   - un second tuyau (3) étanche,
   - une seconde couche d'isolation thermique (4) en matériau isolant,
   - un lest (5) en matériau de densité supérieure à celle de l'eau de mer,

   **caractérisé par le fait que** ladite première couche d'isolation thermique (2) est en matériau isolant, ladite conduite comprenant en outre une enveloppe protectrice (6) étanche et résistante aux chocs à l'extérieur dudit lest (5).

2. Conduite selon la revendication 1 **caractérisée en ce qu'**au moins un élément du groupe constitué par le premier tuyau (1), le second tuyau (3) et l'enveloppe protectrice (6) présente des caractéristiques mécaniques telles que :

$$Re > E. \, \alpha. \, \Delta T$$

   où

   E est le module d'élasticité du matériau constitutif,
   $\alpha$ est le coefficient de dilatation thermique du matériau constitutif,
   $\Delta T$ est la différence entre la température de service dudit élément et la température ambiante en service,
   et Re est la limite élastique du matériau à la température de service dudit élément.

3. Conduite selon la revendication 1 ou 2, **caractérisée en ce qu'**au moins un desdits tuyaux (1, 3) est muni d'au moins un système de compensation de la contraction thermique (30).

4. Conduite selon la revendication 3, **caractérisée en ce que** ledit système de compensation de la contraction thermique (30) se présente sous forme d'un manchon (31) comprenant au moins une ondulation radiale (32).

5. Conduite selon l'une des revendications 1 à 4, **caractérisée par le fait qu'**au moins un élément du groupe constitué par le premier tuyau (1), le second tuyau (3) et l'enveloppe protectrice (6) est ancré au niveau de ses extrémités à des butées fixes (B) assurant la reprise des contraintes thermiques subies par ledit élément.

6. Conduite selon l'une des revendications 1 à 5, **caractérisée en ce qu'**au moins une des couches d'isolation thermique (2, 4) est en matériau présentant une conductivité thermique inférieure à $20.10^{-3}$W.m$^{-1}$.K$^{-1}$ à température ambiante, de préférence inférieure à $16.10^{-3}$W.m$^{-1}$ à K$^{-1}$ à -160°C.

7. Conduite selon la revendication 6, **caractérisée en ce qu'**au moins une des couches d'isolation thermique (2,4) est en matériau nano poreux de type aérogel.

8. Conduite selon l'une des revendications 1 à 7, **caractérisée en ce qu'**au moins l'un desdits tuyaux (1, 3) étanches est constitué d'un alliage à haute teneur en Nickel.

9. Conduite selon l'une des revendications 1 à 8, **caractérisée en ce que** le second tuyau (3) étanche est réalisé en matériau composite à base de résine polymère.

10. Conduite selon l'une des revendications 1 à 9, **caractérisée en ce que** ledit lest (5) est constitué d'un matériau apte à être coulé sous une forme liquide, pulvérulente ou granulaire dans le volume cylindrique compris entre la seconde couche d'isolation (4) et l'enveloppe protectrice (6).

11. Conduite selon la revendication 10, **caractérisée en ce que** ledit lest (5) comporte du béton.

12. Conduite selon la revendication 11, **caractérisée en ce que** ledit lest (5) comporte au moins un conduit creux (12) ménagé dans ce dernier.

13. Conduite selon l'une des revendications 1 à 12 **caractérisée en ce qu'**au moins une des couches d'isolation thermique (2, 4) se présente sous une forme pulvérulente ou granulaire permettant sa coulée dans le volume destiné à l'accueillir.

14. Conduite selon la revendication 13, **caractérisée en ce que** ladite couche d'isolation thermique (2, 4) sous une forme pulvérulente ou granulaire comporte au moins un tronçon obturé à ses deux extrémités longitudinales par des dispositifs d'obstruction (8) en matériau isolant.

15. Conduite selon la revendication 13 ou 14, **caractérisée en ce que** ladite couche d'isolation thermique (2, 4) sous forme pulvérulente ou granulaire comporte au moins une barre d'écartement (14) en matériau isolant, d'épaisseur sensiblement égale à celle de ladite couche d'isolation thermique (2,4) et disposée parallèlement à la dite conduite.

16. Conduite selon l'une des revendications 1 à 15, **caractérisée en ce qu'**elle est constituée de tronçons (T) préfabriqués pouvant être raccordés bout à bout.

17. Conduite selon la revendication 16, **caractérisée en ce que** les tronçons (T) présentent au moins une extrémité (E) étagée, les éléments constitutifs desdits tronçons (T) ayant une extension longitudinale décroissante les uns par rapport aux autres dans le sens radial vers l'extérieur.

18. Conduite selon l'une des revendications 1 à 17, **caractérisée en ce qu'**un dispositif de détection des fuites est disposé dans le sens longitudinal sur toute la longueur de la conduite (C) entre le premier tuyau (1) et l'enveloppe protectrice (6).

19. Utilisation d'une conduite (C) selon l'une des revendications 1 à 18, pour le transport d'un fluide à basse température.

20. Utilisation selon la revendication 19, dans laquelle on fait circuler un gaz d'inertage dans au moins une des couches d'isolation thermique (2, 4).

21. Terminal maritime pour le transport de gaz liquéfié **caractérisé par le fait qu'**il comprend un poste de chargement et de déchargement (P) relié à une installation à terre (I) par au moins une conduite selon l'une des revendications 1 à 20.

**Claims**

1. Thermally insulated pipeline (T, C) comprising from the inside to the outside:

   - a first sealed pipe (1),
   - a first thermal insulation layer (2),
   - a second sealed pipe (3),
   - a second thermal insulation layer (4) made of insulating material, and
   - a ballast (5) made of material with a density above that of sea water,

   **characterized in that** said first thermal insulation layer (2) is made of insulating material, said pipeline additionally comprising a sealed, impact-resistant protective casing (6) outside said ballast (5).

2. Pipeline according to Claim 1, **characterized in that** at least one element from the group consisting of the first pipe (1), the second pipe (3) and the protective casing (6) has mechanical characteristics such that:

$$Re > E . \alpha . \Delta T$$

   where

   E is the modulus of elasticity of the constituent material,
   $\alpha$ is the coefficient of thermal expansion of the constituent material,
   $\Delta T$ is the difference between the service temperature of said element and the ambient temperature in service, and Re is the yield strength of the material at the service temperature of said element.

3. Pipeline according to Claim 1 or 2, **characterized in that** at least one of said pipes (1, 3) is provided with at least one system (30) for compensating thermal contraction.

4. Pipeline according to Claim 3, **characterized in that** said system (30) for compensating thermal contraction takes the form of a sleeve (31) comprising at least one radial corrugation (32).

5. Pipeline according to one of Claims 1 to 4, **characterized in that** at least one element from the group consisting of the first pipe (1), the second pipe (3) and the protective casing (6) is anchored at its ends to fixed abutments (B), which take up the thermal stresses to which said element is subjected.

6. Pipeline according to one of Claims 1 to 5, **characterized in that** at least one of the thermal insulation layers (2, 4) is made of a material having a thermal conductivity of below $20.10^{-3}W.m^{-1}.K^{-1}$ at ambient temperature, preferably below $16.10^{-3}W.m^{-1}.K^{-1}$ at -160°C.

7. Pipeline according to Claim 6, **characterized in that** at least one of the thermal insulation layers (2, 4) is made of aerogel-type porous nanomaterial.

8. Pipeline according to one of Claims 1 to 7, **characterized in that** at least one of said sealed pipes (1, 3) consists of an alloy with a high nickel content.

9. Pipeline according to one of Claims 1 to 8, **characterized in that** the second sealed pipe (3) is made of a polymer resin-based composite.

10. Pipeline according to one of Claims 1 to 9, **characterized in that** said ballast (5) consists of a material capable of being cast in a liquid, pulverulent or granular form into the cylindrical volume contained between the second insulation layer (4) and the protective casing (6).

11. Pipeline according to Claim 10, **characterized in that** said ballast (5) comprises concrete.

12. Pipeline according to Claim 11, **characterized in that** said ballast (5) comprises at least one hollow duct (12) provided in the latter.

13. Pipeline according to one of Claims 1 to 12, **characterized in that** at least one of the thermal insulation layers (2, 4) is present in a pulverulent or granular form allowing it to be cast into the volume intended to receive it.

14. Pipeline according to Claim 13, **characterized in that** said thermal insulation layer (2, 4) in a pulverulent or granular form comprises at least one section closed off at its two longitudinal ends by blocking devices (8) made of insulating material.

15. Pipeline according to Claim 13 or 14, **characterized in that** said thermal insulation layer (2, 4) in a pulverulent or granular form comprises at least one spacer bar (14) made of insulating material, which is arranged parallel to said pipeline and has a thickness substantially equal to that of said thermal insulation layer (2, 4).

16. Pipeline according to one of Claims 1 to 15, **characterized in that** it consists of prefabricated sections (T) which can be connected end to end.

17. Pipeline according to Claim 16, **characterized in that** the sections (T) have at least one stepped end (E), the constituent elements of said sections (T) having a relatively decreasing longitudinal extension in the outwardly radial direction.

18. Pipeline according to one of Claims 1 to 17, **characterized in that** a device for detecting leaks is arranged in the longitudinal direction over the whole length of the pipeline (C), between the first pipe (1) and the protective casing (6).

19. Use of a pipeline (C) according to one of Claims 1 to 18 for transporting a low-temperature fluid.

20. Use according to Claim 19, in which an inerting gas is circulated through at least one of the thermal insulation layers (2, 4).

21. Sea terminal for the transportation of liquefied gas, **characterized in that** it comprises a loading and unloading station (P) connected to a land installation (I) by at least one pipeline according to one of Claims 1 to 20.

**Patentansprüche**

1. Thermisch isolierte Leitung (T, C), welche von innen nach außen umfasst:

ein erstes dichtes Rohr (1),

- eine erste thermische Isolationsschicht (2),
- ein zweites dichtes Rohr (3),
- eine zweite thermische Isolationsschicht (4) aus Isoliermaterial,
- einen Ballast (5) aus einem Material mit höherer Dichte als derjenigen von Meerwasser,

**dadurch gekennzeichnet, dass** die erste thermische Isolationsschicht (2) aus Isoliermaterial besteht, wobei die Leitung außerdem eine dichte und stoßunempfindliche Schutzhülle (6) außerhalb des Ballasts (5) umfasst.

2. Leitung gemäß Anspruch 1, **dadurch gekennzeichnet, dass** wenigstens ein Element der durch das erste Rohr (1), das zweite Rohr (3) und die Schutzhülle (6) gebildeten Gruppe die folgenden mechanischen Eigenschaften aufweist:

$$Re > E. \, \alpha. \, \Delta T \, ,$$

wobei

E das Elastizitätsmodul des zugrundeliegenden Materials ist,
$\alpha$ der thermische Ausdehnungskoeffizient des zugrundeliegenden Materials ist,
$\Delta T$ die Differenz zwischen der Betriebstemperatur des Elements und der Umgebungstemperatur im Betrieb ist, und

Re die Elastizitätsgrenze des Materials bei der Betriebstemperatur des Elements ist.

3. Leitung gemäß Anspruch 1 oder 2, **dadurch gekennzeichnet, dass** wenigstens eines der Rohre (1, 3) mit wenigstens einem System zur Kompensation der thermischen Kontraktion (30) versehen ist.

4. Leitung gemäß Anspruch 3, **dadurch gekennzeichnet, dass** das System zur Kompensation der thermischen Kontraktion (30) in Form einer Hülse (31) vorliegt, die wenigsten eine radiale Welligkeit (32) umfasst.

5. Leitung gemäß einem der Ansprüche 1 bis 4, **dadurch gekennzeichnet, dass** wenigstens ein Element der aus dem ersten Rohr (1), dem zweiten Rohr (3) und der Schutzhülle (6) gebildeten Gruppe auf Höhe seiner Enden an festen Anschlägen (B) verankert ist, welche die Aufnahme der thermischen Spannungen gewährleisten, denen das Element unterliegt.

6. Leitung gemäß einem der Ansprüche 1 bis 5, **dadurch gekennzeichnet, dass** wenigstens eine der thermischen Isolationsschichten (2, 4) aus einem Material besteht, das eine thermische Leitfähigkeit von weniger als $20.10^{-3}W.m^{-1}.K^{-1}$ bei Umgebungstemperatur, vorzugsweise von weniger als $16.10^{-3}W.m^{-1}.K^{-1}$ bei -160 °C aufweist.

7. Leitung gemäß Anspruch 6, **dadurch gekennzeichnet, dass** wenigstens eine der thermischen Isolationsschichten (2, 4) aus nanoporösem Aerogelmaterial besteht.

8. Leitung gemäß einem der Ansprüche 1 bis 7, **dadurch gekennzeichnet, dass** wenigstens eines der dichten Rohre (1, 3) aus einer Legierung mit hohem Nickelgehalt besteht.

9. Leitung gemäß einem der Ansprüche 1 bis 8, **dadurch gekennzeichnet, dass** das zweite dichte Rohr (3) aus einem Kompositmaterial auf der Basis eines Polymerharzes besteht.

10. Leitung gemäß einem der Ansprüche 1 bis 9, **dadurch gekennzeichnet, dass** der Ballast (5) aus einem Material besteht, das in flüssiger, pulverartiger oder körniger Form in das zylindrische Volumen zwischen der zweiten Isolationsschicht (4) und der Schutzhülle (6) gegossen werden kann.

11. Leitung gemäß Anspruch 10, **dadurch gekennzeichnet, dass** der Ballast (5) Beton aufweist.

12. Leitung gemäß Anspruch 11, **dadurch gekennzeichnet, dass** der Ballast (5) wenigstens zwei Hohlleitungen (12) aufweist, welche in Letzterem ausgespart sind.

13. Leitung gemäß einem der Ansprüche 1 bis 12, **dadurch gekennzeichnet, dass** die wenigstens eine thermische Isolationsschicht (2, 4) in pulverartiger oder körniger Form vorliegt, die es ermöglicht, dass sie in das zu ihrer Aufnahme vorgesehene Volumen gegossen werden kann.

14. Leitung gemäß Anspruch 13, **dadurch gekennzeichnet, dass** die in pulverartiger oder körniger Form vorliegende thermische Isolationsschicht (2, 4) wenigstens einen Abschnitt aufweist, der an seinen beiden Längsenden durch Sperrvorrichtungen (8) aus Isoliermaterial verschlossen ist.

15. Leitung gemäß Anspruch 13 oder 14, **dadurch gekennzeichnet, dass** die in pulverartiger oder körniger Form vorliegende thermische Isolationsschicht (2, 4) wenigstens eine Abstandsleiste (14) aus Isoliermaterial aufweist, deren Dicke im Wesentlichen die gleiche wie diejenige der thermischen Isolationsschicht (2, 4) ist, und die parallel zu der Leitung angeordnet ist.

16. Leitung gemäß einem der Ansprüche 1 bis 15, **dadurch gekennzeichnet, dass** sie aus vorgefertigten Abschnitten (T) besteht, die miteinander verbunden werden können.

17. Leitung gemäß Anspruch 16, **dadurch gekennzeichnet, dass** die Abschnitte (T) wenigstens ein stufenförmiges Ende (E) aufweisen, wobei die die Abschnitte (T) bildenden Elemente eine Längsausdehnung aufweisen, die von einem zum anderen in radialer Richtung nach außen abnimmt.

18. Leitung gemäß einem der Ansprüche 1 bis 17, **dadurch gekennzeichnet, dass** eine Vorrichtung zur Detektion von Lecks in Längsrichtung über die gesamte Länge der Leitung (C) zwischen dem ersten Rohr (1) und der Schutzhülle (6) angeordnet ist.

**19.** Verwendung einer Leitung (C) gemäß einem der Ansprüche 1 bis 18 zum Transport von Fluiden bei niedriger Temperatur.

**20.** Verwendung gemäß Anspruch 19, bei der man wenigstens ein Inertgas in wenigstens einer der thermischen Isolationsschichten (2, 4) zirkulieren lässt.

**21.** Seeterminal für den Transport von Flüssiggas, **dadurch gekennzeichnet, dass** er eine Lade- und Entladestelle (P) umfasst, die mittels wenigstens einer Leitung nach einem der Ansprüche 1 bis 20 mit einer landgestützten Anlage (I) verbunden ist.

FIG.1

FIG.2

FIG.3

FIG.4

FIG.5

FIG.7

FIG.8

FIG.6

FIG.12

FIG.11

**FIG.10**

**FIG.9**

**FIG.13**

FIG.14

**EP 1 557 602 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4014369 A
- FR 2748545 A
- FR 2746891 A